# EUROPÄISCHE PATENTSCHRIFT

(11) **EP 2 177 339 B1**
(45) Veröffentlichungstag und Bekanntmachung des Hinweises auf die Patenterteilung: **20.04.2011**
(21) Anmeldenummer: 09012506.3
(22) Anmeldetag: 02.10.2009
(51) Int. Cl.: B29C 45/27

(54) **Spritzgiessdüse**
Injection moulding nozzle
Buse de moulage par injection

(30) Priorität: 14.10.2008 DE 102008051202
(43) Veröffentlichungstag der Anmeldung: 21.04.2010
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Buchhold, Jürgen

(56) Entgegenhaltungen:
- EP-A1- 1 938 945
- EP-B1- 1 524 091
- DE-A1-102007 027 548
- DE-U1-202008 005 073

## Beschreibung

Die Erfindung betrifft eine Spritzgießdüse für ein Spritzgießwerkzeug gemäß dem Oberbegriff von Anspruch 1 sowie ein Spritzgießwerkzeug gemäß Anspruch 14.

Bei der Herstellung von Kunststoffteilen mit Hilfe von Spritzgusstechniken ist es häufig von Vorteil, die Formkavitäten von der Seite anzuspritzen. Hierfür geeignete Spritzgießdüsen und Spritzgießwerkzeuge sind daher im Stand der Technik in verschiedenen Ausgestaltungen bekannt.

DE 20 2008 005 073 U1 offenbart beispielsweise eine Heißkanaldüse für die seitliche Anspritzung von Kunststoffbauteilen, mit einem mehrteiligen Düsenkörper, in dem ein Schmelzekanal ausgebildet ist, der im unteren Bereich des Düsenkörpers in mehrere schräg nach außen verlaufende Teilkanäle verzweigt ist. Jeder Teilkanal mündet innerhalb einer Ausnehmung im Düsenkörper in einer schrägen Fläche, auf der ein Spitzeneinsatz aufgesetzt ist. Dieser hat einen Grundkörper mit einer schrägen Dichtfläche, in der eine Eintrittsöffnung für den Teilkanal ausgebildet ist, und mit einem zylindrischen Abschnitt, an dessen Ende die Düsenspitze ausgebildet ist. Die Spitzeneinsätze sind mit den Düsenspitzen radial nach außen gerichtet. Sie stehen seitlich über die Umfangsfläche des Düsenkörpers nach außen vor. Über jeder Düsenspitze ist koaxial eine separate Dichthülse angeordnet, welche die Heißkanaldüse gegenüber dem Werkzeug abdichtet. Von unten wird ein Klemmscheibenabschnitt auf den Düsenkörper geschraubt, um die Spitzeneinsätze zu sichern. Deren Grundkörper müssen dabei mit ihren Dichtflächen gleichmäßig und fest gegen die Schrägflächen des Düsenkörpers gepresst werden.

Aufbau und Montage dieser Heißkanaldüse ist mithin relativ aufwendig, nicht zuletzt, weil jedes Spitzenelement einzeln mit dem Düsenkörper verbunden und über den Klemmscheibenabschnitt gesichert werden muss. Insbesondere im kritischen Bereich der Düsenspitzen können daher schnell Undichtigkeiten auftreten, insbesondere dann, wenn der Klemmscheibenabschnitt nicht richtig sitzt.

EP 1 524 091 A2 beschreibt ebenfalls eine Spritzgießdüse für ein Spritzgießwerkzeug mit einem Materialrohr, in dem ein axial verlaufender Strömungskanal endseitig in mehrere schräg nach außen gerichtete Umlenkkanäle aufgeteilt ist. Diese münden in radial angeordneten seitlichen Ausnehmungen, die in einer Seitenwandung des Materialrohrs ausgebildet sind. In dessen Boden befindet sich eine weitere polygone Ausnehmung, die über radiale Bohrungen mit den seitlichen Ausnehmungen des Materialrohrs und über diese mit der Umfangsfläche des Materialrohrs verbunden ist. In die radialen Bohrungen werden nach außen gerichtete Düsenspitzen eingesteckt und innerhalb der Ausnehmung von einem Befestigungselement gesichert. Die Düsenspitzen ragen über die Umfangsfläche des Materialrohrs hinaus und werden innerhalb der radialen Öffnungen von der aus den Umlenkkanälen austretenden fließfähigen Masse umströmt. Koaxial zu den Düsenspitzen angeordnete Dichthülsen dichten das Materialrohr gegen das Werkzeug ab.

Auch hier müssen die Umlenkkanäle als Schrägbohrungen von unten in das Materialrohr eingebracht werden, was fertigungstechnisch aufwendig ist. Ein weiterer Nachteil der zuvor beschriebenen Spritzgießdüse besteht darin, dass die Anzahl und die Anordnung der Düsenspitzen nicht variierbar ist, da diese durch die Anzahl und die Anordnung der in dem Materialrohr ausgebildeten Umlenkkanäle und Durchgangsbohrungen festgelegt sind. Damit kann die Spritzgießdüse nicht an verschiedenartige Aufgaben angepasst werden, beispielsweise wenn sich die Anzahl und/oder der Abstand der Angusspunkte ändert. die Düse ist entsprechend nur beschränkt einsetzbar und es muss für jedes Spritzgießwerkzeug ein spezielles Materialrohr gefertigt werden, was wiederum mit hohen Kosten verbunden ist.

Eine weitere Spritzgießdüse ist aus der De-A-10 2007027548 bekannt.

Ausgehend von diesem Stand der Technik ist es eine Aufgabe der vorliegenden Erfindung, eine Spritzgießdüse für ein Spritzgießwerkzeug mit einem alternativen Aufbau sowie ein Spritzgießwerkzeug für eine solche Spritzgießdüse zu schaffen, welche die zuvor beschriebenen Nachteile zumindest teilweise beheben. Angestrebt wird insbesondere eine Spritzgießdüse, die mit einfachen Mitteln kostengünstig aufgebaut ist und flexibel eingesetzt werden kann.

Hauptmerkmale der Erfindung sind im kennzeichnenden Teil von Anspruch 1 und im nebengeordneten Anspruch 14. angegeben. Ausgestaltungen sind Gegenstand der Ansprüche 2 bis 13.

Bei einer Spritzgießdüse für ein Spritzgießwerkzeug, mit einem Düsenkörper und mit wenigstens einer Düsenspitze, wobei in dem Düsenkörper ein Strömungskanal für eine zu verarbeitende Spritzgießmasse ausgebildet ist, der an oder in der wenigstens einen Düsenspitze endet und über wenigstens eine Austrittsöffnung mit einer in einem Formeinsatz ausgebildeten Formkavität des Spritzgießwerkzeugs strömungsverbunden ist, und wobei jede Düsenspitze quer zur Axialrichtung des Düsenkörpers ausgerichtet und mittels eines Halteelements in ihrer Position fixiert ist, sieht die Erfindung vor, dass jede Düsenspitze in einer Aufnahmeeinrichtung angeordnet ist, die separat vom Düsenkörper ausgebildet ist, und dass jede Düsenspitze mittels des Halteelements lösbar in der separaten Aufnahmeeinrichtung festlegbar ist, wobei das Halteelement den Strömungskanal des Düsenkörpers fortsetzt und die zu verarbeitende Spritzgießmasse der wenigstens einen Düsenspitze und/oder der wenigstens einen Austrittsöffnung zuführt.

Durch diese Anordnung ist es möglich, die Düsenspitzen jederzeit rasch und bequem auswechseln zu können, ohne die gesamte Heißkanaldüse ausbauen zu müssen. Überdies besteht die Möglichkeit, die separat vom Düsenkörper ausgebildete Aufnahmeeinrichtung vollständig auszuwechseln. Dadurch kann die Heißkanaldüse mit nur wenigen Handgriffen an unterschiedliche Aufgaben und Bedürfnisse angepasst werden. So lassen sich beispielsweise die Abstände oder die Lage der Düsenspitzen jederzeit ändern oder man kann bequem die Anzahl der Düsenspitzen erhöhen, indem einfach eine entsprechende Aufnahmeeinrichtung an der Düse montiert wird. Dazu muss lediglich die bisherige Aufnahmeeinrichtung von dem Düsenkörper abgenommen und eine neue oder andere Aufnahmeeinrichtung montiert werden. Ein Ausbau der kompletten Düse ist nicht erforderlich, was sich günstig auf die Betriebskosten auswirkt. Auch die Werkzeugkosten werden deutlich verringert, weil der Rest der Heißkanaldüse stets weiterverwendet werden kann.

Die Erfindung sieht zudem vor, dass das Halteelement die Aufnahmeeinrichtung durchragt und längsverschieblich in dem Düsenkörper geführt ist. Damit wird die Aufnahmeeinrichtung über das Halteelement mit dem Düsenkörper verbunden, wobei jedoch keine starre bzw. feste Verbindung entsteht. Das Halteelement kann sich vielmehr relativ zum Düsenkörper bewegen, so dass die unterschiedlichen Wärmeausdehnungen der verschiedenen Bauteile der Düse beim Aufheizen und Abkühlen des Werkzeugs stets ausgeglichen werden, ohne dass es zu Undichtigkeiten während des Betriebes kommt.

Das Halteelement hat hierzu zweckmäßig einen Halsabschnitt, der längsverschieblich in den Strömungskanal des Düsenkörpers hinein ragt, wobei in dem Halsabschnitt ein Hauptkanal ausgebildet ist, der den Strömungskanal des Düsenkörpers fortsetzt.

Das Halteelement sichert damit nicht nur die Düsenspitzen in der Aufnahmeeinrichtung. Es leitet überdies die zu verarbeitende Schmelze den Düsenspitzen zu. Dazu sind innerhalb des Halteelements Unterverteilerkanäle ausgebildet, die mit dem Hauptkanal strömungsverbunden sind und die zu verarbeitende Spritzgießmasse der wenigstens einen Düsenspitze und/oder der wenigstens einen Austrittsöffnung zuführen.

Das Halteelement bildet damit nicht nur ein Sicherungselement, sondern zugleich eine Verteilereinrichtung, welche die zu verarbeitende Schmelze innerhalb der Aufnahmeeinrichtung den Düsenspitzen bzw. den Austrittsöffnungen zuführt.

Konstruktiv ist es günstig, wenn die Aufnahmeeinrichtung eine Ausnehmung aufweist, in welche das Halteelement einsetzbar ist. Diese Ausnehmung hat bevorzugt eine polygonartige Innenfläche, während das Halteelement mit einer formgleichen polygonartigen Seitenfläche versehen ist. Die Innenfläche der Aufnahmeeinrichtung und die Außen- bzw. Seitenfläche des Haltelements weisen mithin abschnittsweise glatte und ebene Flächen auf, die eine zuverlässige und dauerhaft dichte Anordnung der Düsenspitzen innerhalb der Aufnahmeeinrichtung ermöglichen.

Zur Aufnahme der Düsenspitzen hat die Aufnahmeeinrichtung quer zur Axialrichtung des Düsenkörpers Bohrungen, in welche die Düsenspitzen einsetzbar oder einsteckbar sind. Letztere können mithin von innen in die Aufnahmeeinrichtung eingesetzt werden, was sich ebenfalls günstig auf die Handhabung der Spritzgießdüse auswirkt. Letztere kann selbst bei engen Platzverhältnissen im Werkzeug montiert werden, weil die gewöhnlich über die Außenabmessungen des Düsenkörpers bzw. des Düsengehäuses hinaus ragenden Düsenspitzen nachträglich eingesetzt werden können. Geteilte Werkzeugplatten sind daher nicht notwendig.

Bei der Montage werden die Düsenspitzen einfach von der Innenseite der Ausnehmung her durch die Radialbohrungen der Aufnahmeeinrichtung hindurch gesteckt. Anschließend wird von unten das Halteelement bzw. die Verteilereinrichtung eingesetzt, die mit ihrem Halsabschnitt durch die Aufnahmeeinrichtung hindurch in den Strömungskanal des Düsenkörpers bzw. des Materialrohrs eingreift. Ein an den Halsabschnitt anschließender Sockelabschnitt des Halteelements sichert die Düsenspitzen innerhalb der Aufnahmeeinrichtung, so dass diese sich nicht mehr radial nach innen bewegen können. Die Düsenspitzen werden mithin von dem Halteelement innerhalb der Aufnahmeeinrichtung lagefixiert.

Dabei stützt sich jede Düsenspitze innerhalb der Ausnehmung an der Innenfläche der Aufnahmeeinrichtung und an der Seitenfläche des Halteelements ab, wobei jede Düsenspitze dichtend an der Seitenfläche des Halteelements anliegt. Die polygonartigen Flächen von Aufnahmeeinrichtung und Halteelement sorgen dabei für eine optimale Dichtwirkung. Ergänzend kann zwischen jeder Düsenspitze und dem Halteelement eine Dichtung vorgesehen sein, um zu verhindern, dass in diesen Bereichen Schmelze austreten kann.

Man erkennt, dass die polygonalen Grundflächen der Aufnahmeeinrichtung und des Halteelements seitlich ebene Dichtflächen für die Düsenspitzen bilden, die mithin stets dicht in der Düse integriert sind. Dies gewährleistet eine sehr hohe Sicherheit gegenüber Leckagen.

Um die zu verarbeitende Schmelze unmittelbar und bei optimaler Temperatur dem Formnest zuführen zu können, ist in jeder Düsenspitze ein Düsenkanal ausgebildet, der mit einem Unterverteilerkanal des Halteelements strömungsverbunden ist. Die Unterverteilerkanäle münden dabei zweckmäßig in den ebenen Flächenabschnitten der polygonalen Seitenfläche des Halteelements. Jede Düsenspitze weist eine Austrittsöffnung für die zu verarbeitende Spritzgießmasse auf.

Um die Heißkanaldüse gegenüber dem Werkzeug, insbesondere gegenüber den Formnestplatten abzudichten, ist jede Düsenspitze koaxial von einer Hülse umschlossen, die zwischen der Aufnahmeeinrichtung und dem Formeinsatz angeordnet ist.

Eine weitere wichtige Ausgestaltung der Erfindung sieht vor, dass die Aufnahmeeinrichtung mit einer Heizung versehen ist. Hierbei kann es sich um eine gewöhnliche Heizwendel handeln, die in einer Nut im Außenumfang der Aufnahmeeinrichtung eingebracht ist. Man kann daher auch eine Dickschichtheizung verwenden, die auf einer der Außenflächen und/oder der Innenflächen der Aufnahmeeinrichtung aufgebracht ist.

Mit Vorteil ist das Halteelement längsverschieblich in der Aufnahmeeinrichtung angeordnet. Dadurch besteht die Möglichkeit, das Halteelement und/oder die Düsenspitzen gegenüber der Aufnahmeeinrichtung zu justieren, um beispielsweise die Düsenspitzen gegenüber dem Werkzeug ausrichten zu können. Hierzu ist eine Justiereinrichtung für das Halteelement vorgesehen, die vorzugsweise von außen zugänglich ist.

Um dabei unerwünschte Verschiebungen von Halteelement, Düsenkörper und Aufnahmeeinrichtung zueinander zu verhindern ist es vorteilhaft, wenn die Verteilereinrichtung und das Materialrohr, bzw. die Aufnahmeeinrichtung und die Verteilereinrichtung, bzw. die Aufnahmeeinrichtung und das Materialrohr jeweils verdrehsicher relativ zueinander angeordnet sind, d.h. zwischen der Aufnahmeeinrichtung, dem Halteelement und/oder dem Düsenkörper ist eine Verdrehsicherung ausgebildet oder angeordnet.

Das Halteelement der Spritzgießdüse - und auch die Düsenspitzen - bestehen bevorzugt aus einem gut wärmeleitenden Material, wobei zumindest das Material des Halteelements zudem einen höheren Ausdehnungskoeffizienten aufweist als die Aufnahmeeinrichtung. Dadurch wird zum einen die Schmelze bis zur Angussöffnung hin auf einer optimalen Temperatur gehalten, Zum anderen sorgt das sich innerhalb der Ausnehmung der Aufnahmeeinrichtung stärker ausdehnende Material der Halteeinrichtung für einen stets optimalen Halt der Düsenspitzen, die fest in der Aufnahmeeinrichtung verpresst werden und dadurch dicht an dem Halteelement bzw. dem Verteilerelement anliegen.

Weitere Vorteile ergeben sich, wenn die Düsenspitzen, das Halteelement und die Aufnahmeeinrichtung eine vormontierte Baueinheit bilden Dies ermöglicht eine schnelle Montage der Baueinheit an der Spritzgießdüse.

Unabhängig davon kann die Baueinheit an eine beliebige Standarddüse montiert werden, beispielsweise anstelle eines herkömmlichen Düsenmundstückes. Hierzu muss der Halsabschnitt des Halteelements einfach in den Endbereich des Düsenkörpers bzw. des Materialrohres der düse eingeschoben werden. Damit kann eine beliebige Standarddüse dazu verwendet werden, um Formkavitäten von der Seite her anzuspritzen. Dies ist besonders in Bezug auf Lager- und Produktionskosten günstig.

Ein Spritzgießwerkzeug hat zweckmäßig eine erfindungsgemäße Spritzgießdüse. Dadurch können sämtliche Vorteile der Spritzgießdüse innerhalb des Spritzgießwerkzeugs genutzt werden.

Weitere Merkmale, Einzelheiten und Vorteile der Erfindung ergeben sich aus dem Wortlaut der Ansprüche sowie aus der nachfolgenden Beschreibung eines Ausführungsbeispiels einer erfindungsgemäßen Spritzgießdüse anhand der Zeichnungen. Es zeigen:
- Fig. 1: eine schematische Schnittansicht einer Ausführungsform einer Spritzgießdüse gemäß der vorliegenden Erfindung;
- Fig. 2a: eine Detailansicht der Verteilereinrichtung im Längsschnitt
- Fig. 2b: einen Querschnitt durch den Sockelabschnitt der Verteilereinrichtung aus Fig. 2a
- Fig. 3a: eine Gesamtansicht einer Aufnahmeeinrichtung
- Fig. 3b: eine seitliche Ansicht einer Aufnahmeeinrichtung
- Fig. 3c: eine Gesamtansicht der Aufnahmeeinrichtung mit montierter Verteilereinrichtung und Düsenspitzen
- Fig. 3d: einen Längsschnitt durch die Aufnahmeeinrichtung aus Fig. 3c
- Fig. 4a: einen Schnitt durch eine Düsenspitze
- Fig. 4b: die Gesamtansicht einer Düsenspitze
- Fig. 4c: die Aufsicht auf eine Düsenspitze
- Fig. 5: einen schematischen Querschnitt durch die Verteilereinrichtung und die Aufnahmeeinrichtung aus Fig. 3c im Bereich der Düsenspitzen.
- Fig. 6: eine weitere Ausführungsvariante der erfindungsgemäßen Spritzgießdüse

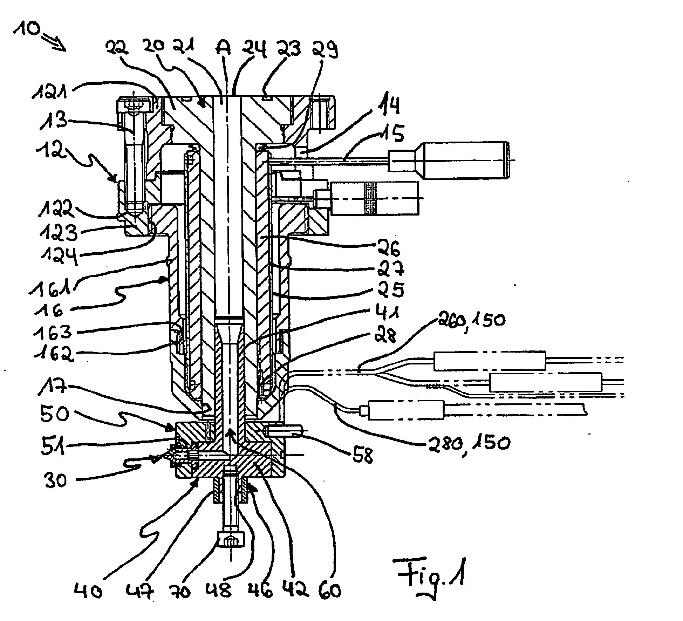

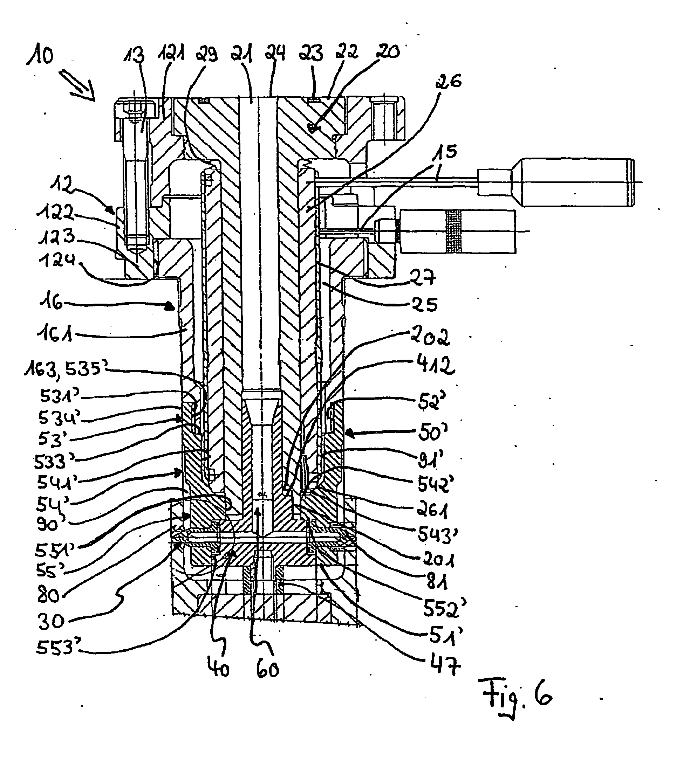

Die in den Figuren 1 und 6 dargestellten Spritzgießdüsen 10 sind zum Einsetzen in ein Spritzgießwerkzeug bestimmt. Dieses dient zur Herstellung von Formteilen aus einer fließfähigen Masse, wie beispielsweise aus einer Kunststoffschmelze oder dergleichen. Das Spritzgießwerkzeug hat gewöhnlich eine Aufspannplatte sowie parallel dazu eine Verteilerplatte, in der ein System von Strömungskanälen ausgebildet ist. Diese münden in Spritzgießdüsen 10, die beispielsweise als Heißkanaldüsen ausgebildet.

Sowohl die in Fig. 1 als auch die in Fig. 6 gezeigte Spritzgießdüse 10 umfasst einen Düsenkörper 20 in Form eines Materialrohrs, das an seinem oberen Ende mit einem flanschartigen Anschlusskopf 22 versehen ist, der mit Hilfe eines Dichtringes 23 gegenüber der (nicht dargestellten) Verteilerplatte abgedichtet ist. Das Materialrohr 20 sitzt lösbar in einem Schaft 16. Der Schaft 16 und der Anschlusskopf 22 des Materialrohres 20 werden wiederum von einem Gehäuse 12 gehalten. In das Materialrohr 20 ist mittig ein Strömungskanal 21 für eine Materialschmelze eingebracht, der sich in der axialen Richtung A erstreckt. Der bevorzugt als Bohrung ausgebildete Strömungskanal 21 besitzt im Anschlusskopf 22 eine Materialzufuhröffnung 24, über die dem Strömungskanal 21 die von der Verteilerplatte kommende Materialschmelze zugeführt wird.

Auf den Außenumfang des Materialrohrs 20 ist eine Heizung 26 aufgesetzt. Sie erstreckt sich über nahezu die gesamte axiale Länge des Materialrohrs 20. Die Heizung 26 wird in axialer Richtung A mit Hilfe von Federn 29 in der optimalen Position gehalten. Dadurch kann verhindert werden, dass sich die Heizung 26 beispielsweise durch Wärmeausdehnung verschiebt, was für die Temperatur der Schmelze fatale Folgen hätte. Auf der Heizung 26 ist außerdem ein Schutzrohr 27 vorgesehen. Dieses kann beispielsweise dazu dienen eine (nicht dargestellten) Heizwendel in der korrekten Position zu halten. Für die Erfassung der von der Heizung 26 erzeugten Temperatur ist ein Temperaturfühler 28 vorgesehen, der bis zum unteren Endbereich des Materialrohrs 20 geführt ist.

Das Gehäuse 12, das den Schaft 16, das Materialrohr 20 und die Heizung 26 samt Schutzrohr 27 aufnimmt, ist zweiteilig ausgebildet. Die beiden Gehäuseteile 121, 122 werden mittels Schrauben 13 aneinander befestigt, von denen in Fig. 1 bzw. Fig. 6 jeweils nur eine beispielhaft dargestellt ist. Zwischen den Gehäuseteilen 121 und 122 ist eine Aussparung 14 vorgesehen, durch welche die Leitungen 15 für elektrische Einrichtungen der Spritzgießdüse 10 geführt sind. Diese versorgen beispielsweise die Heizung 26 und den Temperaturfühler 28. Die Zweiteilung des Gehäuses 12 dient der einfacheren Montage insbesondere hinsichtlich dieser Leitungen 15. Der untere Gehäuseteil 122 ist außerdem mit einem Endabschnitt 123 ausgestattet, der mit einem Gewinde 124 ausgestattet sein kann. Mit Hilfe dieses Gewindes 124 kann der Schaft 16 an dem Gehäuse 12 angeschraubt werden.

In dem in Fig. 1 dargestellten Ausführungsbeispiel ist der Schaft 16 zweiteilig ausgebildet. Der obere Schaftteil 161 wird in das Gehäuse 12 geschraubt und so dort festgelegt. Der untere Schaftteil 162 wird seinerseits über ein Gewinde 163 am oberen Schaftteil 161 angeschraubt. Es ist von Vorteil, wenn zumindest der untere Schaftteil 162 aus einem schlecht wärmeleitenden Material besteht, beispielsweise aus Titan. Dies dient der thermischen Isolierung der beheizten Düse gegenüber dem möglichst kühl zu haltenden Formnest. Während im oberen Bereich der Düse zwischen der Heizung 26 bzw. dem Schutzrohr 27 und dem oberen Schaftteil 161 ein isolierender Luftspalt 25 ausgebildet ist, ist es im unteren Bereich zur exakten Positionierung und zur stabilen Halterung der Düse unvermeidlich, dass die Heizung 26 und/oder das heiße Materialrohr 20 mit dem unteren Schaftteil 162 in direkten Kontakt kommen. Dieser hat seinerseits direkten Kontakt zum (nicht dargestellten) Formnest. Die Ausbildung des unteren Schaftteils 162 aus einem schlecht wärmeleitenden Material führt daher vorteilhaft zu einer Reduktion des Wärmeüberganges zwischen der Düse und dem Formnest.

Man erkennt, dass es sich bei der in Fig. 1 dargestellten Düse um eine Standardheißkanaldüse handelt. In das untere Ende des Materialrohrs 20 ist jedoch keine gewöhnliche Düsenspitze eingesetzt, sondern ein Halteelement 40, das mit einem Halsabschnitt 41 längsverschieblich in den Strömungskanal 21 des Materialrohrs 20 hineinragt. Das Haltelement 40 dient zur Sicherung von Düsenspitzen 30, die sternförmig in einer separat zum Düsenkörper bzw. zum Materialrohr 20 ausgebildeten Aufnahmeeinrichtung 50 eingesetzt sind.

Die Aufnahmeeinrichtung 50 hat eine nach unten offene Ausnehmung 52, in welche die Düsenspitzen 30 und das Halteelement 40 eingesetzt werden. Letzteres besteht aus dem Halsabschnitt 41 und einem Sockelabschnitt 42. Während der Halsabschnitt 41 längsverschieblich in dem Strömungskanal 21 des Materialrohres 20 angeordnet ist, wird der Sockelabschnitt 42 von der Aufnahmeeinrichtung 50 umschlossen. In dieser Aufnahmeeinrichtung 50 sind Radialbohrungen 51 ausgebildet, in welchen Düsenspitzen 30 angeordnet sind. In den Düsenspitzen 30 sind jeweils Düsen- und Spitzenkanäle 34, 35 ausgebildet, durch welche die Schmelze bis zur (nicht dargestellten) Angussöffnung geleitet wird. Die Düsenspitzen 30 sind quer zur Achse A der Spritzgießdüse 10 ausgerichtet und durch die Verteilereinrichtung 40 mit dem Strömungskanal 21 der Spritzgießdüse 10 strömungsverbunden.

Die Aufnahmeeinrichtung 50 ist mit Hilfe einer separaten Heizung 59 beheizbar, beispielsweise eine Heizwendel 260, wobei die Temperatur durch einen weiteren Temperaturfühler 280 kontrolliert wird. Die Heizung 59, 260 und der Temperaturfühler 280 der Aufnahmeeinrichtung 50 werden durch separate elektrische Anschlüsse 150 versorgt.

Zur korrekten Positionierung der Düsenspitzen 30 in Bezug auf die anzuspritzenden (nicht dargestellten) Formkavitäten, wird die Verteilereinrichtung 40 in axialer Richtung durch einen Schraubbolzen 70 justiert, welcher in eine in der Verteilereinrichtung 40 ausgebildete Justierbuchse 48 eingreift. Ein weiterer in die Aufnahmeeinrichtung 50 eingesetzter Bolzen 58 kann in eine (ebenfalls nicht dargestellte) Ausnehmung im Formnest eingreifen und verhindert so als Verdrehsicherung eine Drehung der aus Düsenspitzen 30, Verteilereinrichtung 40 und Aufnahmeeinrichtung 50 bestehenden Baugruppe um die Achse A. Gleichzeitig wird die Aufnahmeeinrichtung 50 in der Höhe fixiert, so dass die Düsenspitzen 30 stets zentrisch über der jeweils zugeordneten Angussöffnung liegen. Der notwendige Längenausgleich der Düse 10 beim Aufheizen und Abkühlen des Werkzeugs erfolgt über den im Strömungskanal 21 des Düsenkörpers bzw. Materialrohrs 20 gleitgeführten Halsabschnitt 41 des Halteelements 40.

Man erkennt, dass die genannte Baugruppe bestehend aus Düsenspitzen 30, Verteilereinrichtung 40 und Aufnahmeeinrichtung 50 beispielsweise an der Stelle eines Düsenmundstückes in eine beliebige Standarddüse eingesetzt werden können. Mithin ist es einer der besonderen Vorteile der Erfindung, dass der Schmelzefluss einer Standarddüse derart umgeleitet werden kann, dass das seitliche Anspritzen mehrerer Formkavitäten möglich ist.

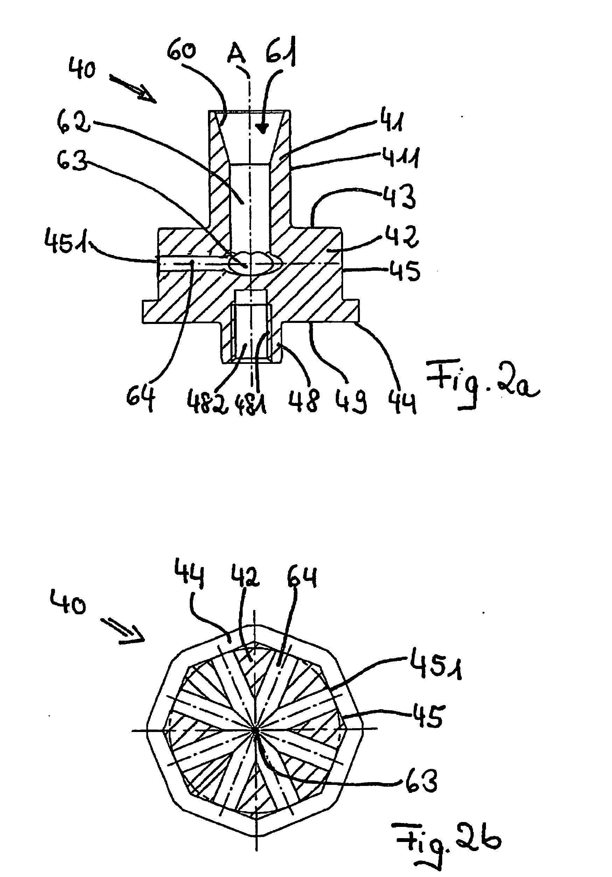

Die Verteilereinrichtung 40 weist dazu, wie in Fig. 2a dargestellt, ein Verteilerkanalsystem 60 auf. Dieses dient der Umlenkung des Schmelzeflusses von der axialen Richtung in eine Richtung quer zur Achse A. Es beginnt mit einem konischen Einlauftrichter 61, welcher den Strömungskanal 21 des Materialrohres fortsetzt und welcher seinerseits von einem Verteilerhauptkanal 62 fortgesetzt wird. Sowohl der Einlauftrichter 61 als auch der Verteilerhauptkanal 62 sind im Halsabschnitt 41 der Verteilereinrichtung 40 ausgebildet. Der Verteilerhauptkanal 62 setzt sich im Sockelabschnitt 42 fort und mündet etwa in dessen Mitte in einen Umlenkpunkt 63. Von diesem geht mindestens ein Unterverteilerkanal 64 aus. Die Unterverteilerkanäle 64 verlaufen quer zur axialen Richtung A. In Fig. 2b erkennt man, dass sie bevorzugt sternförmig angeordnet sind. Dabei hat der Sockelabschnitt 42 eine polygonale Grundfläche. In jeder Seitenfläche 45 des Polygons mündet an einer Austrittsöffnung 451 einer der Unterverteilerkanäle 64.

Man erkennt in Fig. 2a weiterhin, dass der Halsabschnitt 41 bevorzugt mittig auf dem Sockelabschnitt 42 angeordnet ist. Außerdem ist es vorteilhaft, wenn die Außenseite 411 des Halsabschnittes 41 dem Innendurchmesser des Strömungskanals 21 formangepasst ist, beispielsweise zylindrisch. So kann der Halsabschnitt 41 derart längsverschieblich in den Strömungskanal 21 eingesetzt werden, dass er bei Erreichen der Betriebstemperatur formschlüssig und dicht im Materialrohr 20 angeordnet ist.

Der Sockelabschnitt 42 ist dagegen scheibenähnlich ausgebildet. Er hat eine Oberseite 43, eine Unterseite 49 und mindestens eine Seitenfläche 45. Die Seitenflächen 45 können gebogen oder wie oben beschreiben und in Fig. 2b dargestellt bevorzugt gerade sein. Im zweiten Fall hat der Sockelabschnitt 42 einen polygonalen Querschnitt (vgl. Fig. 2b). In jedem Fall ist die äußere Gestalt des Sockelabschnittes 42 der inneren Form der Aufnahmeeinrichtung 50 angepasst. An der Unterseite 49 des Sockeabschnittes 42 ist ein Flanschrand 44 ausgebildet. Auf der Oberseite 43 ist bevorzugt mittig der Halsabschnitt 41 angeordnet.

Vorteilhaft ist es, wenn die Verteilereinrichtung 40 aus einem gut wärmeleitenden Material gefertigt ist.

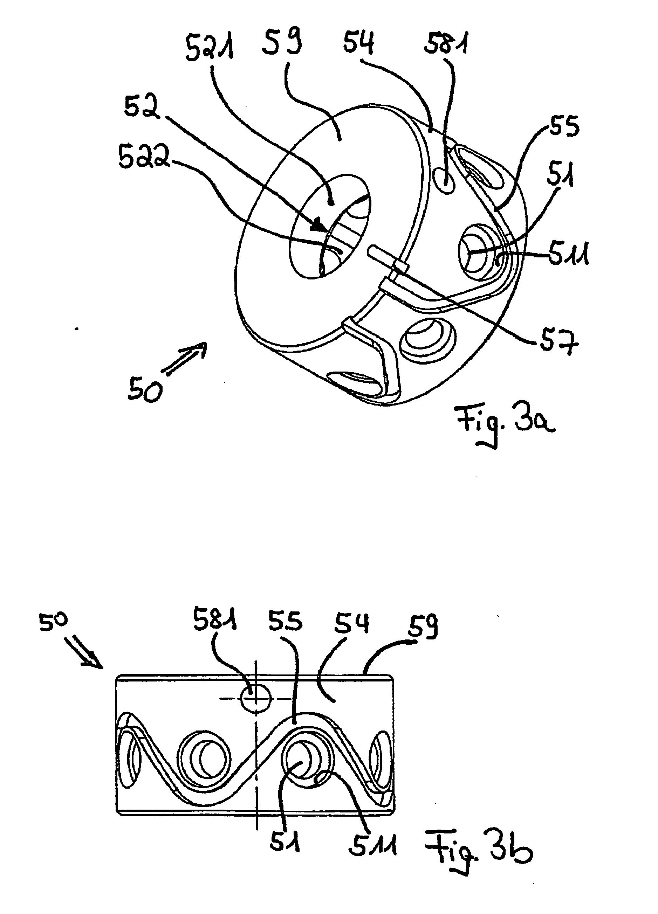

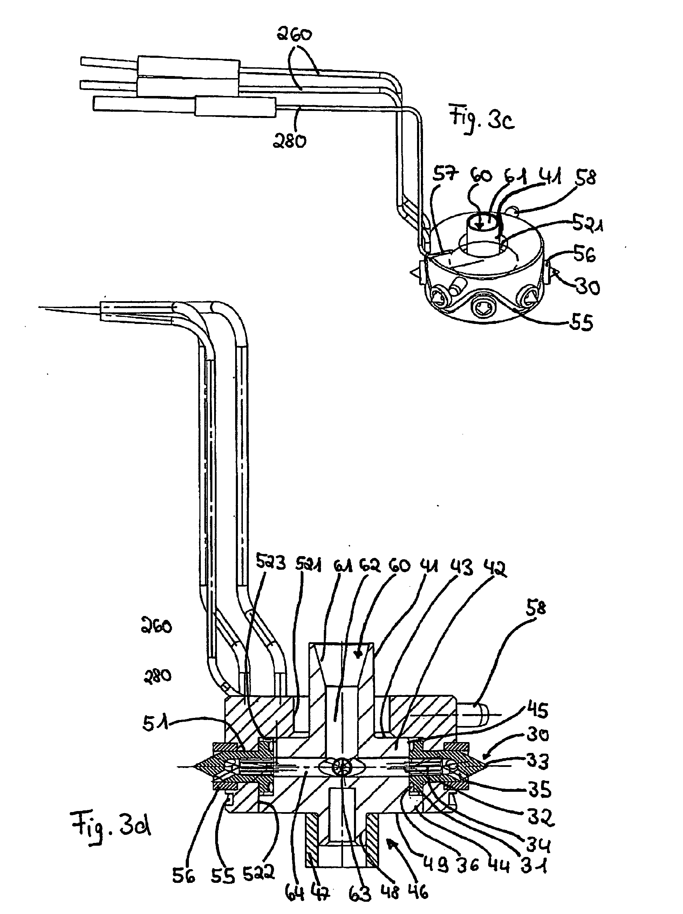

Der Sockelabschnitt 42 der Verteilereinrichtung 40 wird von der in den Fig. 3a, 3b, 3c und 3d dargestellten Aufnahmeeinrichtung 50 umfasst. Diese hat insgesamt die Form eines flachen Zylinders. In ihrem Inneren ist eine zentrale Bohrung 52 ausgebildet, die zwei Abschnitte 521, 522 hat. Sie dient der Aufnahme der Verteilereinrichtung 40. Die Radialbohrungen 51 zur Aufnahme der Düsenspitzen 30 ausgebildet sind in einer Seitenflächen 54 der Aufnahmeeinrichtung 50 ausgebildet.

In der Seitenfläche 54 ist weiterhin eine Nut 55 ausgebildet, welche den Heizwendel 260 aufnehmen kann. Diese Nut 55 verläuft schlangenlinienförmig um die Radialbohrungen 51. Auf diese Weise wird die Aufnahmeeinrichtung 50 vorteilhaft gleichmäßig erhitzt. Sie dient mithin nicht nur der Positionierung der Düsenspitzen 30, sondern auch der Beheizung der Verteilereinrichtung 40 und der Düsenspitzen 30. Besonders vorteilhaft ist es, wenn die Beheizung der Aufnahmeeinrichtung 50 wie im gezeigten Ausführungsbeispiel unabhängig von der Beheizung des Materialrohres 20 ist.

Weiterhin sind in der Seitenfläche 54 eine Bohrung 581 zur Aufnahme des als Verdrehsicherung dienenden Bolzens 58 und eine Einkerbung 57 zur Aufnahme des Thermofühlers 280 ausgebildet.

In den Radialbohrungen 51 ist zur Außenseite hin jeweils eine Erweiterung 511 ausgebildet. In diese Erweiterungen 511 können, wie in den Fig. 3c und 3d erkennbar, Hülsen 56 eingesetzt, vorzugsweise eingepresst, werden. Die Hülsen 56 sind vorteilhaft aus einem schlecht wärmeleitenden Material, bevorzugt aus Titan. Mit ihrer Hilfe wird der Wärmeübergang zwischen der beheizten Aufnahmeeinrichtung 50 und dem Formnest, an welchem die Hülsen 56 im montierten Zustand anliegen, möglichst gering gehalten.

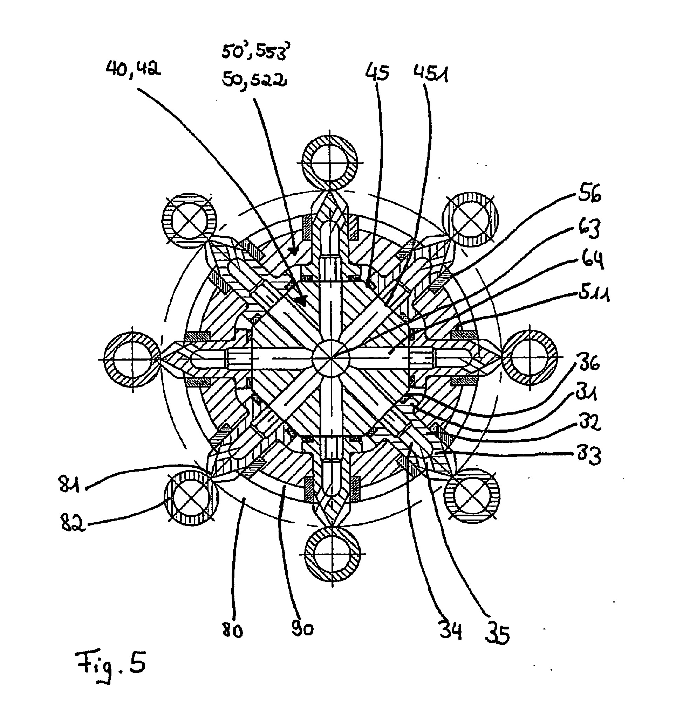

Man erkennt in Fig. 3a und 3c, dass der erste Abschnitt 521 der zentralen Bohrung 52 ebenfalls zylindrisch ausgebildet ist. Der zweite Abschnitt 522 ist der Gestalt des Sockelabschnittes 42 der Verteilereinrichtung 40 formangepasst (vgl. Fig. 5).

Im montierten Zustand der Baugruppe sind die Düsenspitzen 30 durch die Radialbohrungen 51 gesteckt und die Verteilereinrichtung 40 ist von unten in die zentrale Bohrung 52 der Aufnahmeeinrichtung 50 eingesetzt (siehe Fig. 3c und 3d). Dabei ragt der Halsabschnitt 41 der Verteilereinrichtung 40 durch den ersten Abschnitt 521, so dass er in das Materialrohr 20 der Spritzgießdüse 10 eingesteckt werden kann. Der Sockelabschnitt 42 wird dagegen vom zweiten Abschnitt 522 vollständig umfasst. Er liegt dabei mit seiner Oberfläche 43 an einem Absatz 523, der zwischen dem ersten und dem zweiten Abschnitt 521, 522 ausgebildet ist an. Auf diese Weise entsteht vorteilhaft eine Dichtung zwischen der Verteilereinrichtung 40 und der Aufnahmeeinrichtung 50.

Man erkennt, dass jede Austrittsöffnungen 451 der Verteilereinrichtung 40 linear fluchten von dem Düsenkanal 34 einer Düsenspitze 30 fortgesetzt wird. Dabei drückt die Verteilereinrichtung 40 mit ihrer Seitenfläche 45 im Betriebszustand von der Innenseite des zweiten Bohrungsabschnittes 522 aus gegen die Düsenspitzen 30, so dass ein Herausfallen derselben verhindert wird.

Gleichzeitig wird auf diese Weise eine Dichtung zwischen den Düsenspitzen 30 und der Verteilereinrichtung 40 erzielt, so dass das unerwünschte Austreten von Schmelze zwischen diesen Teilen verhindert wird. Letzteres wird zusätzlich durch Dichtungen 36 unterstützt, die im Bereich eines Flanschkragens 31 der Düsenspitze 30 angeordnet sein können. Dabei kann es sich beispielsweise um Metall-O-Ringe oder ähnliches handeln.

Man erkennt weiter, dass die Düsenspitzen 30 jeweils einen Tubus 32 haben. Bevorzugt ist der Durchmesser des Tubus 32 derart bemessen, dass der Tubus 32 bei Erreichen der Betriebstemperatur dicht in der Radialbohrung 51 anliegt. Der Flanschkragen 31 stützt sich an der Innenseite des Bohrungsabschnittes 522 ab und verhindert, dass die Düsenspitze 30 weiter als gewollt in die Radialbohrung 51 hineinrutscht.

Das Halteelement 40 stellt somit eine Verteilereinrichtung für die Düsenspitzen 30 dar. Man erkennt außerdem, dass die Düsenkanäle 34 durch die Verteilerkanäle 64, den Umlenkpunkt 63 und den Hauptkanal 62, mithin also durch das Verteilerkanalsystem 60, mit dem Strömungskanal 21 strömungsverbunden sind.

Der Flanschrand 44 der Verteilereinrichtung 40 schließt im Betriebszustand unterhalb der Flanschkragen 31 der Düsenspitzen passgenau mit der Aufnahmeeinrichtung 50 ab. Besonders vorteilhaft ist es dabei, wenn der Flanschkragen 31 ebenso wie der Sockelabschnitt 42 und der zweite Bohrungsabschnitt 522 eine polygonale Grundfläche hat. Dann ist es nämlich nicht möglich, die Verteilereinrichtung 40 im montierten Zustand gegenüber der Aufnahmeeinrichtung 50 zu verdrehen. Mithin ist stets sicher gestellt, dass die Verteilerkanäle 64 passgenau in die Düsenkanäle 34 münden.

Man erkennt in Fig. 3d weiterhin, dass die Justierbuchse 48 drehbar in einer Stützhülse 47 am (nicht dargestellten) Formnest gelagert ist. Diese Stützhülse 47 ist bevorzugt aus einem schlecht wärmeleitenden Material, bspw. Titan. Mit Ihrer Hilfe wird der Wärmeübergang zwischen der heißen Verteilereinrichtung 40 und dem kühlen Formnest möglichst gering gehalten. Man erkennt, dass die Justierbuchse 48, die Stützhülse 47 und der in die Justierbuchse 48 einschraubbare Bolzen 70 eine Justiereinrichtung 46 bilden. Mit ihrer Hilfe kann die Verteilereinrichtung 40 um die in axialer Richtung A liegende Achse gedreht werden, bis die Düsenspitzen 30 die optimale Position in Bezug auf die Angussöffnungen 81 haben (vgl. Fig. 5). Dabei können die Aufnahmeeinrichtung 50 und das Materialrohr 20 mitgedreht werden. Gleichzeitig kann die gesamte Baugruppe in axialer Richtung fixiert werden.

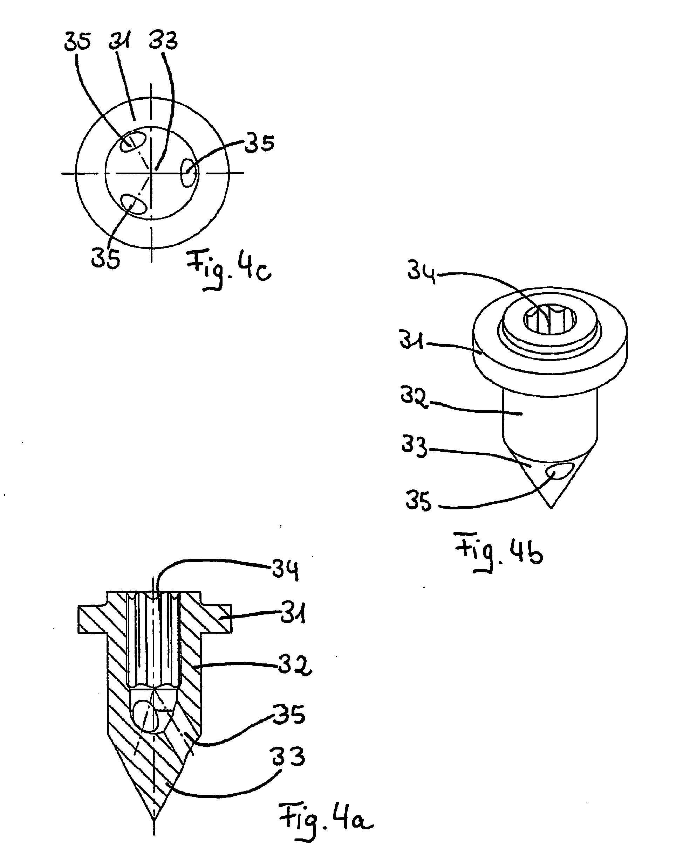

Die Detailansicht der Düsenspitzen in den Fig. 4a, 4b und 4c zeigt, dass die Düsenspitzen 30 jeweils mit einem Flanschkragen 31, einem Tubus 32 und einer Spitze 33 ausgebildet sind. Im Tubus 32 verläuft ein Düsenkanal 34, der im Bereich der Spitze 33 in mindestens einen Spitzenkanal 35 mündet. Dabei ist es vorteilhaft, wenn die Düsenkanäle 34 zumindest abschnittsweise die Form eines Innensechskants haben, wie in Fig. 4a und 4b erkennbar. Auf diese Weise können die Düsenspitzen 30 bei der Montage beispielsweise mit Hilfe eines Sechskantschlüssels gehalten und bewegt werden, was insbesondere dann von Vorteil ist, wenn die Düsenspitzen aus einer erstarrten Schmelze gelöst und demontiert werden müssen.

Die Düsenkanäle 34 sind über die Verteilereinrichtung 40 mit dem Strömungskanal 21 des Materialrohres 20 strömungsverbunden. Sie werden von den Spitzenkanäle 35 fortgesetzt, durch welche die Schmelze in den jeweiligen Anguss 81 (vgl. Fig. 5) und von dort in die Formkavität 82 geleitet wird. Die Düsenspitzen 30 sind bevorzugt aus einem gut wärmeleitenden Material gefertigt. So behält die Schmelze bis möglichst direkt zum Formnest die optimale Temperatur.

Fig. 5 zeigt die sternförmige Anordnung von acht Düsenspitzen 30 in einer Aufnahmeeinrichtung 50. Dabei kann es sich sowohl um eine Aufnahmeeinrichtung 50 wie sie in Fig. 1 gezeigt ist, als auch um eine (unten beschriebene) Aufnahmeeinrichtung 50' entsprechend dem Ausführungsbeispiel von Fig. 6 handeln. Man erkennt, dass der Sockelabschnitt 42 der Verteilereinrichtung 40 gegen das Flanschkragenseitige Ende der Düsenspitzen 30 drückt. Dadurch werden diese in den Radialbohrungen 51 der Aufnahmeeinrichtung 50, 50' gehalten. Weiterhin ist deutlich sichtbar, dass der Bohrungsabschnitt 522, 553' der Aufnahmeeinrichtung 50, 50', welcher den Sockelabschnitt 42 aufnimmt, und der Sockelabschnitt 42 der Verteilereinrichtung 40 die gleiche Grundform haben - im gezeigten Beispiel achteckig.

Die Verteilerkanäle 64 verlaufen sternförmig vom Umlenkpunkt 63 zu den Austrittsöffnungen 451, die in den Seitenflächen 45 des Sockelabschnittes 42 ausgebildet sind. An die Austrittsöffnungen 451 schließen in gerader Linie die Düsenkanäle 34 an. Diese werden wiederum von den Spitzenkanälen 35 fortgesetzt. Letztere münden jeweils in eine im Formnest 80 ausgebildete Angussöffnung 81, von welcher aus die Schmelze in die jeweilige Formkavität 82 gelangt. Dabei ist im Formnest 80 für jede Düsenspitze 30 ein Anguss 81 ausgebildet. Die Spitze 33 der Düsenspitze 30 kann in den Anguss 81 hinein oder sogar über diesen hinaus ragen.

Zwischen der Aufnahmeeinrichtung 50 und dem Formnest 80 ist ein Luftspalt 90 ausgebildet. Um diesen Luftspalt 90 gegenüber eindringender Schmelze abzudichten sind zwischen der Aufnahmeeinrichtung 50 und der jeweiligen Angussöffnung 81 Hülsen 56 angeordnet. Diese sind bevorzugt aus schlecht wärmeleitendem Material ausgebildet. Sie sind in die Erweiterungen 511 der Radialbohrungen 51 eingepresst. Neben der Dichtungsfunktion können die Hülsen 56 auch der Zentrierung und lateralen Ausrichtung der Spritzgießdüse 10 im Formnest 80 dienen.

Die in Fig. 6 dargestellte Ausführungsvariante der Spritzgießdüse 10 wird in ihrem unteren Bereich von einer Aufnahmeeinrichtung 50' umfasst. Diese tritt an die Stelle des unteren Schaftteiles 162 der in Fig. 1 gezeigten Standarddüse. Die Aufnahmeeinrichtung 50' hat einen oberen Abschnitt 53' einen mittleren Abschnitt 54' und einen unteren Abschnitt 55'. Im Inneren der Aufnahmeeinrichtung 50' ist eine stufenförmige Axialbohrung 52' ausgebildet, die ebenfalls aus mehreren Bohrungsabschnitten 531', 541', 551', 553' besteht.

Im oberen Abschnitt 53' der Aufnahmeeinrichtung 50' ist auch der oberste Bohrungsabschnitt 531' ausgebildet. Er wird durch einen Absatz 533' begrenzt, der zwischen dem oberen und dem mittleren Abschnitt 53', 54' ausgebildet ist. An diesem Absatz 533' kann sich der Schaftteil 161 mit seinem unteren Ende abstützen, wenn die Düse die Betriebstemperatur erreicht hat. Außerdem kann der oberste Bohrungsabschnitt 531' ein Gewinde 535' aufweisen, in welches das Gewinde 163 des unteren Endes des Schaftteils 161 eingreifen kann. Dadurch kann die Aufnahmeeinrichtung 50' an den Schaft 16 geschraubt werden. Des Weiteren ist die Außenwand 534' des oberen Abschnittes 53' derart bemessen, dass mit ihrer Hilfe ein Luftspalt 90', der zwischen der Aufnahmeeinrichtung 50' und dem Formnest 80 ausgebildet ist bei Erreichen der Betriebstemperatur abgedichtet werden kann.

Im mittleren Abschnitt 54' der Aufnahmeeinrichtung 50' ist ebenfalls ein Bohrungsabschnitt 541' ausgebildet. Dieser hat einen geringeren Durchmesser als der oberste Bohrungsabschnitt 531' und endet an einem weiteren Absatz 542'. In seinem unteren Bereich kann er sich konisch zum Absatz 542' hin verjüngen. Der Bohrungsabschnitt 541' im mittleren Abschnitt 54' umfasst das untere Ende der Heizung 26 und des Schutzrohres 27. Dabei ist allerdings zwischen der Innenwand der Aufnahmeeinrichtung 50' und der Isolierschicht 27' zusätzlich ein isolierender Luftspalt 91' ausgebildet. Dieser verhindert, dass die Aufnahmeeinrichtung 50' durch die Heizung 26 erwärmt wird. Man erkennt, dass die Heizung 26, die an ihrem untersten Ende eine leichte Schräge 261 aufweist, mit Hilfe der Federn 29 gegen die konische Fläche 543' gedrückt wird.

Der untere Abschnitt 55' der Aufnahmeeinrichtung 50' umfasst zwei Bohrungsabschnitte 551', 553'. Der erste Bohrungsabschnitt 551' hat den geringsten Durchmesser von allen vier Bohrungsabschnitten 531', 541', 551', 553'. Er umfasst das untere Ende 201 des Materialrohres 20, welches in der gezeigten Ausführungsvariante nicht mehr von der Heizung 26 umfasst ist.

Ein weiterer Absatz 552' bildet den Übergang zum zweiten Bohrungsabschnitt 553'. In dessen Bereich sind die Radialbohrungen 51' vorgesehen, die zur Aufnahme von Düsenspitzen 30 dienen.

Die Radialbohrungen 51' können an ihrer dem Formnest 80 zugewandten Seite eine Erweiterung 511' haben. In diese Erweiterung 511' kann eine Hülse 56' eingesetzt werden. Die Hülse 56' überbrückt im Betriebszustand den Luftspalt 90' zwischen der Aufnahmeeinrichtung 50' und dem Formnest 80. Sie stellt somit eine zusätzliche Dichtung dar. Mit ihrer Hilfe soll erreicht werden, dass die Schmelze möglichst nur in den Bereich des Angusses 81 und weiter in die Formkavität gelangen kann, nicht aber in den isolierenden Luftspalt 90' zwischen der Aufnahmeeinrichtung 50' und dem Formnest 80.

Die Düsenspitzen 30 werden, analog zum vorherigen Ausführungsbeispiel, vom zweiten Bohrungsabschnitt 553' aus durch die Radialbohrungen 51' gesteckt. Bevorzugt ist der Durchmesser des Tubus 32 derart bemessen, dass der Tubus 32 bei Erreichen der Betriebstemperatur dicht in der Radialbohrung 51' anliegt. Der Flanschkragen 31 stützt sich an der Innenseite des Bohrungsabschnittes 553' ab und verhindert, dass die Düsenspitze 30 weiter als gewollt in die Radialbohrung 51' hineinrutscht.

Das Herausfallen der Düsenspitzen 30 zur Innenseite des Bohrungsabschnittes 553' hin wird auch hier mit Hilfe der Verteilereinrichtung 40 verhindert.

In der in Fig. 6 dargestellten Ausführungsvariante ist außerdem eine zweite Verdrehsicherung im Bereich des Halsabschnittes 41 der Verteilereinrichtung 40 ausgebildet. Dabei handelt es sich um einen einseitig ausgebildeten Vorsprung 412. Dieser greift in eine korrespondierende Ausnehmung 202 im Materialrohr 20 ein. Mithin kann die gesamte Verteilereinrichtung 40 und in der Folge auch die Aufnahmeeinrichtung 50 nicht mehr gegenüber dem Materialrohr 20 verdreht werden.

Die Verteilereinrichtung 40 wird auch bei diesem Ausführungsbeispiel zur Montage derart in das Materialrohr 20 und die Aufnahmeeinrichtung 50' eingeschoben, dass jede Austrittsöffnungen 451 linear fluchten von dem Düsenkanal 34 einer Düsenspitze 30 fortgesetzt wird. Dabei drückt die Verteilereinrichtung 40 mit ihrer Seitenfläche 45 im Betriebszustand von der Innenseite des zweiten Bohrungsabschnittes 553' aus gegen die Düsenspitzen 30, so dass ein Herausfallen derselben verhindert wird.

Gleichzeitig wird auch hier auf diese Weise eine Dichtung zwischen den Düsenspitzen 30 und der Verteilereinrichtung 40 erzielt, so dass das unerwünschte Austreten von Schmelze zwischen diesen Teilen verhindert wird. Letzteres wird zusätzlich durch Dichtungen 36 unterstützt, die im Bereich des Flanschkragens 31 angeordnet sein können. Dabei kann es sich beispielsweise um Metall-O-Ringe oder ähnliches handeln.

Die Verteilereinrichtung 40 stellt somit auch bei diesem Ausführungsbeispiel ein Halteelement für die Düsenspitzen 30 dar. Man erkennt außerdem, dass die Düsenkanäle 34 durch die Verteilerkanäle 64, den Umlenkpunkt 63 und den Hauptkanal 62, mithin also durch das Verteilerkanalsystem 60, mit dem Strömungskanal 21 strömungsverbunden sind.

Die Erfindung ist nicht auf eine der vorbeschriebenen Ausführungsformen beschränkt, sondern in vielfältiger Weise abwandelbar.

So ist es beispielsweise denkbar, dass die Schmelze von den Verteilerkanälen 64 in die Radialbohrungen 51 geleitet wird und dort die Düsenspitzen 30 umströmt.

Die Heizung 26 kann eine Dickschichtheizung sein.

Sofern die Heizung 26 eine Heizwendel beinhaltet, kann das Schutzrohr 27 dazu dienen die Heizwendel in ihrer Führungsnut zu halten. Das Schutzrohr 27 kann auch als Isolierschicht dienen.

Die Verteilerkanäle 64 können in einem beliebigen Winkel zur axialen Richtung A ausgerichtet sein.

Denkbar ist auch, dass die Düsenspitzen 30 nur zu einer Seite der Spritzgießdüse 10 hin angeordnet sind. Die entsprechenden Formkavitäten können dann in einem Teilkreis ebenfalls nur auf einer Seite angeordnet sein. Weiterhin vorstellbar ist die Anordnungen in mehreren Teilkreisabschnitten auf zwei oder mehr Seiten der Düse 10.

Die Düsenspitzen 30 können mit den Angussöffnungen 81 einen offenen Anguss bilden.

Vorstellbar ist auch, dass die Aufnahmeeinrichtung 50' ohne Gewinde einfach auf das untere Ende des Schaftteils 162 aufgesteckt wird.

Die Justierbuchse 48 kann als separates Bauteil gefertigt sein.

Die Aufnahmeeinrichtung 50, 50' kann eine Heizung 26 sein.

Man erkennt, dass bei einer Spritzgießdüse 10 für ein Spritzgießwerkzeug, mit einem Materialrohr 20, in dem ein Strömungskanal 21 ausgebildet ist, der mit wenigstens einer Düsenspitze 30 strömungsverbunden ist, wobei jede Düsenspitze 30 quer zur axialen Richtung A der Düse 10 ausgerichtet ist und von einem Halteelement lagefixiert ist, das Halteelement vorteilhaft eine Verteilereinrichtung 40 ist. Die Verteilereinrichtung 40 ist längsverschieblich in das Materialrohr 20 einsteckbar und hat einen Halsabschnitt 41 und einen Sockelabschnitt 42. In der Verteilereinrichtung 40 ist ein Verteilerkanalsystem 60 ausgebildet, wobei im Halsabschnitt 41 ein Hauptkanal 62, der den Strömungskanal 21 fortsetzt, und im Sockelabschnitt 42 ein Umlenkpunkt 63 und mindestens ein Verteilerkanal 64 ausgebildet sind. Die Verteilerkanäle 64 verlaufen radial zur axialen Richtung A.

Man erkennt weiter, dass die Düsenspitzen 30 in einer Aufnahmeeinrichtung 50 festlegbar sind, die eine zentrale Ausnehmung 52 hat. In der Aufnahmeeinrichtung 50 sind quer zur axialen Richtung A Radialbohrungen 51 ausgebildet, in welche die Düsenspitzen 30 einsteckbar sind. Die zentrale Ausnehmung 52 nimmt den Sockelabschnitt 42 des Haltelements 40 auf, wobei die Düsenspitzen 30 von dem Sockelabschnitt 42 in der Aufnahmeeinrichtung 50 lösbar fixiert werden.

Das Halteelement 40 hat einen Halsabschnitt 41, der in den Strömungskanal 21 des Düsenkörpers 20 hinein ragt, wobei in dem Halsabschnitt 41 ein Hauptkanal 62 ausgebildet ist, der den Strömungskanal 21 des Düsenkörpers 20 innerhalb des Halteelements 40 fortsetzt und der die zu verarbeitende Spritzgießmasse über in dem Halteelement 40 ausgebildete Unterverteilerkanäle 64 der wenigstens einen Düsenspitze 30 und/oder der wenigstens einen Austrittsöffnung 35 zuführt. Das Halteelement 40 bildet mithin eine Verteilereinrichtung, die mit einem Verteilerkanalsystem 60 versehen ist.

Man erkennt weiter, dass in wenigstens einer Düsenspitze 30 ein Düsenkanal 34 ausgebildet ist und dass die Düsenkanäle 34 der jeweiligen Düsenspitze 30 durch das Verteilerkanalsystem 60 mit dem Strömungskanal 21 strömungsverbunden sind. Vorteilhaft ist zwischen jeder Düsenspitze 30 und der Verteilereinrichtung 40 eine Dichtung 36 vorgesehen.

Weiter weist die Verteilereinrichtung 40 eine Justiereinrichtung 46 auf, zur Ausrichtung der Düsenspitzen 30 und der Angussöffnungen 81 zueinander. Vorteilhaft sind außerdem die Verteilereinrichtung 40 und das Materialrohr 20 verdrehsicher relativ zueinander angeordnet, ebenso wie jeweils die Aufnahmeeinrichtung 50 zur Verteilereinrichtung 40 und die Aufnahmeeinrichtung 50 zum Materialrohr 20. Bei alledem ist es zweckmäßig, wenn die Verteilereinrichtung 40 aus einem gut wärmeleitenden Material hergestellt ist.

### Bezugszeichenliste

- A: Axialrichtung

- 10: Spritzgießdüse
- 12: Gehäuse
- 121: Gehäuseteil
- 122: Gehäuseteil
- 123: Endabschnitt
- 124: Gewinde
- 13: Schraube
- 14: Aussparung
- 15: Leitung
- 150: elektrischer Anschluss
- 16: Schaft
- 161: oberer Schaftteil
- 162: unterer Schaftteil
- 163: Gewinde

- 20: Materialrohr
- 201: unteres Ende
- 202: Ausnehmung
- 21: Strömungskanal
- 22: Anschlusskopf
- 23: Dichtring
- 24: Materialzuführöffnung
- 25: Luftspalt
- 26: Heizung
- 260: Heizwendel
- 261: Schräge
- 27: Schutzrohr
- 28: Temperaturfühler
- 280: Temperaturfühler
- 29: Feder

- 30: Düsenspitze

- 31: Flanschkragen
- 32: Tubus
- 33: Spitze
- 34: Düsenkanal
- 35: Spitzenkanal
- 36: Dichtung

- 40: Haltevorrichtung
- 41: Halsabschnitt
- 411: Außenseite
- 412: Vorsprung
- 42: Sockelabschnitt
- 43: Oberseite
- 44: Flanschrand
- 45: Seitenfläche
- 451: Austrittsöffnung
- 46: Justiereinrichtung
- 47: Stützhülse
- 48: Justierbuchse
- 49: Unterseite

- 50: Aufnahmeeinrichtung
- 51: Radialbohrung
- 511: Erweiterung
- 52: Ausnehmung
- 521: Abschnitt
- 522: Abschnitt
- 523: Absatz
- 524: Innenfläche
- 54: Seitenfläche
- 55: Nut
- 56: Hülse
- 57: Einkerbung
- 58: Bolzen

- 581: Bohrung
- 59: Heizung
- 50': Aufnahmeeinrichtung
- 51': Radialbohrung
- 511': Erweiterung
- 52': Ausnehmung
- 524': Innenfläche
- 53': oberer Abschnitt
- 531': Bohrungsabschnitt
- 533': Absatz
- 534': Außenwand
- 535': Gewinde
- 54': mittlerer Abschnitt
- 541': Bohrungsabschnitt
- 542': Absatz
- 543': Fläche
- 55': unter Abschnitt
- 551': Bohrungsabschnitt
- 552': Absatz

- 553': Bohrungsabschnitt
- 56': Hülse

- 60: Verteilerkanalsystem
- 61: Einlauftrichter
- 62: Verteilerhauptkanal
- 63: Umlenkpunkt
- 64: Unterverteilerkanal

- 70: Schraubbolzen

- 80: Formnest
- 81: Angussöffnung
- 82: Formkavität

- 90: Luftspalt
- 90': Luftspalt
- 91': Luftspalt

## Patentansprüche

1. Spritzgießdüse (10) für ein Spritzgießwerkzeug, mit einem Düsenkörper (20) und mit wenigstens einer Düsenspitze (30).
a) wobei in dem Düsenkörper (20) ein Strömungskanal (21) für eine zu verarbeitende Spritzgießmasse ausgebildet ist, der an oder in der wenigstens einen Düsenspitze (30) endet und über wenigstens eine Austrittsöffnung (35) mit einer in einem Formeinsatz ausgebildeten Formkavität des Spritzgießwerkzeugs strömungsverbunden ist,
b) wobei jede Düsenspitze (30) quer zur Axialrichtung (A) des Düsenkörpers (20) ausgerichtet und mittels eines Halteelements (40) in ihrer Position fixiert ist.
c) wobei jede Düsenspitze (30) in einer Aufnahmeeinrichtung (50, 50') angeordnet ist, die separat vom Düsenkörper (20) ausgebildet ist, und
d) wobei jede Düsenspitzen (30) mittels des Halteelements (40) lösbar in der separaten Aufnahmeeinrichtung (50, 50') festlegbar ist,
**dadurch gekennzeichnet**,
e) dass das Halteelement (40) den Strömungskanal (21) des Düsenkörpers (20) fortsetzt und die zu verarbeitende Spritzgießmasse der wenigstens einen Düsenspitze (30) und/oder der wenigstens einen Austrittsöffnung (35) zuführt,
f) wobei das Halteelement (40) die Aufnahmeeinrichtung (50, 50') durchragt und längsverschieblich in dem Düsenkörper (20) geführt ist.

2. Spritzgießdüse nach Anspruch 1, **dadurch gekennzeichnet, dass** das Halteelement (40) einen Halsabschnitt (41) aufweist, der längsverschieblich in den Strömungskanal (21) des Düsenkörpers (20) hinein ragt, wobei in dem Halsabschnitt (41) ein Hauptkanal (62) ausgebildet ist, der den Strömungskanal (21) des Düsenkörpers (20) fortsetzt.

3. Spritzgießdüse nach Anspruch 1 oder 2, **dadurch gekennzeichnet, dass** innerhalb des Halteelementes (40) Unterverteilerkanäle (64) ausgebildet sind. die mit dem Hauptkanal (62) strömungsverbunden sind und die zu verarbeitende Spritzgießmasse der wenigstens einen Düsenspitze (30) und/oder der wenigstens einen Austrittsöffnung (35) zuführen.

4. Spritzgießdüse nach einem der Ansprüche 1 bis 3, **dadurch gekennzeichnet, dass** die Aufnahmeeinrichtung (50, 50') eine Ausnehmung (52, 52') aufweist, in welche das Halteelement (40) einsatzbar ist.

5. Spritzgießdüsen nach Anspruch 4, **dadurch gekennzeichnet, dass** die Ausnehmung (52, 52') eine polygonartige Innenfläche (524) aufweist und dass das Halteelement (40) eine formgleiche polygonartige Seitenfläche (45) aufweist.

6. Spritzgießdüse nach einem der Ansprüche 1 bis 5, **dadurch gekennzeichnet, dass** die Aufnahmeeinrichtung (50, 50') quer zur Axialrichtung (A) Bohrungen (51. 51') aufweist, in welche die Düsenspitzen (30) einsetzbar oder einsteckbar sind.

7. Spritzgießdüse nach Anspruch 6, **dadurch gekennzeichnet, dass** sich jede Düsenspitze (30) innerhalb der Ausnehmung (52. 52') an der Innenfläche (524, 524') der Aufnahmeeinrichtung (50, 50') und an der Seitenfläche (45) des Halteelements (40) abstützt, wobei jede Düsenspitze (30) dichtend an der Seitenfläche (45) des Halteelements (40) anlegt.

8. Spritzgießdüse nach einem der Ansprüche 1 bis 7, **dadurch gekennzeichnet, dass** in jeder Düsenspitze (30) ein Düsenkanal (34) ausgebildet ist, der mit einem Unterverteilerkanal (64) des Halteelements (40) strömungsverbunden ist.

9. Spritzgießdüse nach einem der Ansprüche 1 bis 8, **dadurch gekennzeichnet, dass** jede Düsenspitze (30) koaxial von einer Hülse (56) umschlossen ist, die zwischen der Aufnahmeeinrichtung (50, 50') und dem Formensatz angeordnet ist.

10. Spritzgießdüse nach einem der Ansprüche 1 bis 9, **dadurch gekennzeichnet, dass** die Aufnahmeeinrichtung (50, 50') mit einer Heizung (59) versehen ist.

11. Spritzgießdüse nach einem der Ansprüche 1 bis 10, **dadurch gekennzeichnet, dass** das Halteelement (40) längsverschieblich in der Aufnahmeeinrichlung (50, 50') angeordnet ist.

12. Spritzgießdüse nach einem der Ansprüche 1 bis 11, **dadurch gekennzeichnet, dass** zwischen der Aufnahmeeinrichtung (50, 50'), dem Halteelement (40) und/oder dem Düsenkörper (20) eine Verdrehsicherung ausgebildet oder angeordnet ist.

13. Spritzgießdüse nach einem der Ansprüche 1 bis 12, **dadurch gekennzeichnet, dass** die Düsenspitzen (30), das Halteelement (40) und die Aufnahmeeinrichtung (50, 50') eine vormontierte Baueinheit sind.

14. Spritzgießwerkzeug mit einer Spritzgießdüsen (10) nach einem der Ansprüche 1 bis 13.

## Claims

1. Injection moulding nozzle (10) for an injection moulding tool, with a nozzle body (20) and with at least one nozzle tip (30),
a) with a flow channel (21) being formed in the nozzle body (20) for an injection moulding compound to be worked and which ends at or in at least one nozzle tip (30) and is by at least one outlet (35) flow-connected to a mould cavity of the injection moulding tool formed in a mould insert,
b) with each nozzle tip (30) being arranged cross to the axial direction (A) of the nozzle body (20) and fixed in its position by a holding element (40),
c) with each nozzle tip (30) being arranged in a receptacle (50, 50') formed separately from the nozzle body (20), and
d) with each nozzle tip (30) being detachably fixable in the separate receptacle (50, 50') by the holding element (40),
**characterized in that**
e) the holding element (40) continues the flow channel (21) of the nozzle body (20) and feeds the injection mould compound to be worked to the at least one nozzle tip (30) and/or the at least one outlet (35);
f) with the holding element (40) projecting through the receptacle (50, 50') and being guided longitudinally moveable in the nozzle body (20).

2. Injection moulding nozzle according to Claim 1, **characterized in that** the holding element (40) has a neck section (41) protruding longitudinally moveably into the flow channel (21) of the nozzle body (20), and that a main channel (62) continuing the flow channel (21) of the nozzle body (20) is formed in the neck section (41).

3. Injection moulding nozzle according to Claim 1 or 2, **characterized in that** within the holding element (40) branch channels (64) are formed flow-connected with the main channel (62) to feed the injection moulding compound to be worked to the at least one nozzle tip (30) and/or the at least one outlet (35).

4. Injection moulding nozzle according to one of the Claims 1 to 3, **characterized in that** the receptacle (50, 50') has a recess (52, 52') for the holding element (40) to be inserted.

5. Injection moulding nozzle according to Claim 4, **characterized in that** the recess (52, 52') has a polygon-like inner surface (524) and that the holding element (40) has an equally formed polygon-like lateral face (45).

6. Injection moulding nozzle according to one of the Claims 1 to 5, **characterized in that** the receptacle (50, 50') has bores (51, 51') cross to the axial direction (A) to insert or plug in the nozzle tips (30).

7. Injection moulding nozzle according to Claim 6, **characterized in that** each nozzle tip (30) is supported inside the recesses (52, 52') by the inner surface (524, 524') of the receptacle (50, 50') and by the lateral face (45) of the holding element (40), with each nozzle tip fitting tightly to the lateral face (45) of the holding element (40).

8. Injection moulding nozzle according to one of the Claims 1 to 7, **characterized in that** in each nozzle tip (30) a nozzle channel (34) is formed flow-connected to one branch channel (64) of the holding element (40).

9. Injection moulding nozzle according to one of the Claims 1 to 8, **characterized in that** Each nozzle tip (30) is coaxially enclosed by a bush (56) arranged between the receptacle (50, 50') and the mould insert.

10. Injection mould nozzle according to one of the Claims 1 to 9, **characterized in that** the receptacle (50, 50') has a heating installation (59).

11. Injection moulding nozzle according to one of the Claims 1 to 10, **characterized in that** the holding element (40) is arranged longitudinally moveable in the receptacle (50, 50').

12. Injection moulding nozzle according to one of the Claims 1 to 11, **characterized in that** between the receptacle (50, 50'), the holding element (40) and/or the nozzle body (20) an anti-torsion device is formed or arranged.

13. Injection moulding nozzle according to one of the Claims 1 to 12, **characterized in that** the nozzle tips (30), the holding element (40 and the receptacle (50, 50') are a pre-assembled constructional unit.

14. Injection moulding tool with an injection moulding nozzle (10) according to one of the Claims 1 to 13.

## Revendications

1. Outil de moulage par injection comprenant une buse de moulage par injection (10) avec un corps de buse (20) et avec au moins une pointe de buse (30).
a) avec un conduit de passage (21) formé dans le corps de buse (20) pour une matière à mouler par injection à traiter et qui se termine à ou dans au moins une pointe de buse (30) et est connecté par passage par au moins une sortie (35) à une cavité de moule de l'outil de moulage par injection formée dans une insertion de moule,
b) avec chaque pointe de buse (30) arrangée de travers à la direction axiale (A) du corps de buse (20) et fixée dans sa position par un élément de retenue (40),
c) avec chaque pointe de buse (30) arrangée dans un logement (50, 50') formé séparément du corps de buse (20), et
d) avec chaque pointe de buse (30) susceptible d'être fixable de manière détachable dans le logement particulier (50, 50') par l'élément de retenue (40),
**caractérisée en ce que**
e) l'élément de retenue (40) prolonge la conduite de passage (21) du corps de buse (20) et amène la matière à mouler par injection à traiter à la au moins une pointe de buse (30) et/ou à la au moins une sortie (35),
f) avec l'élément de retenue (40) avançant à travers le logement (50, 50') est mené de manière longitudinalement amovible dans le corps de buse (20).

2. Buse de moulage par injection selon la Revendication 1, **caractérisée en ce que** l'élément de retenue (40) a une section de cou (41) avançant de manière longitudinalement amovible dans la conduite de passage (21) du corps de buse (20) et avec un canal principal formé dans la section de cou (41) comme prolongation de la conduite de passage (21) du corps de buse (20).

3. Buse de moulage par injection selon la Revendication 1 ou 2, **caractérisée en ce que** dans l'élément de retenue (40) sont formés de sous-canaux distributeurs (64) connectés par passage au canal principal et qui mènent la matière à mouler par injection à traiter à la au moins une pointe de buse (30) et/ou la au moins une sortie (35).

4. Buse de moulage à injection selon une des Revendications 1 à 3, **caractérisée en ce que** le logement (50, 50') à un creux (52, 52') à y poser l'élément de retenue (40).

5. Buse de moulage à injection selon la Revendication 4, **caractérisée en ce que** le creux (52, 52') à une paroi intérieure d'espèce polygone (524) et que l'élément de retenue (40) à une face latérale d'espèce polygone identique (45).

6. Buse de moulage à injection selon une des revendications 1 à 5, **caractérisée en ce que** le logement (50, 50') montre à travers la direction axiale (A) des forures (51, 51') à y poser ou ficher les pointes de buse (30).

7. Buse de moulage à injection selon la Revendication 6, **caractérisée en ce que** chaque pointe de buse (30) dans le creux (52, 52') s'appuie à la paroi intérieure (524, 524') du logement (50, 50') et à la face latérale (45) de l'élément de retenue (40), avec chaque pointe de buse (30) adhère uniformément à la face latérale (45) de l'élément de retenue (40).

8. Buse de moulage à injection selon une des Revendications 1 à 7, **caractérisée en ce que** dans chaque pointe de buse (30) est formé un canal de buse (34) connecté par passage avec un sous-canal distributeur (64) de l'élément de retenue (40).

9. Buse de moulage à injecter selon une des Revendications 1 à 8, **caractérisée en ce que** chaque pointe de buse (30) est coaxialement enveloppée d'un manchon (56) arrangé entre le logement (50, 50') et l'insertion de moule.

10. Buse de moulage à injection selon une des Revendications 1 à 9, **caractérisée en ce que** le logement (50, 50') est muni d'un chauffage (59).

11. Buse de moulage à injection selon une des Revendications 1 à 10, **caractérisée en ce que** l'élément de retenue (40) est arrangé de manière longitudinalement amovible dans le logement (50, 50').

12. Buse de moulage à injection selon une des Revendications 1 à 11, **caractérisée en ce que** entre le logement (50, 50'), l'élément de retenue (40) et/ou le corps de buse (20) est arrangée un dispositif anti-torsion est formé ou arrangé.

13. Buse de moulage à injection selon une des Revendications 1 à 12, **caractérisée en ce que** les pointes de buse (30), l'élément de retenue (40) et le logement (50, 50') sont une unité modulaire pré-montée.

14. Outil de moulage à injection avec une buse de moulage à injection (10) selon une des Revendications 1 à 13.
